# FASCICULE DE BREVET EUROPEEN

(11) **EP 1 670 306 B1**
(45) Date de publication et mention de la délivrance du brevet: **20.08.2008**
(21) Numéro de dépôt: 04817098.9
(22) Date de dépôt: 20.09.2004
(51) Int. Cl.: A01D 78/10

(54) **MACHINE DE FENAISON COMPORTANT UN DISPOSITIF DE SUSPENSION AU TRANSPORT**
HEUERNTEMASCHINE MIT EINER TRANSPORTAUFHÄNGUNGSVORRICHTUNG
HAYING MACHINE COMPRISING A TRANSPORT SUSPENSION DEVICE

(30) Priorité: 29.09.2003 FR 0311390
(43) Date de publication de la demande: 21.06.2006
(73) Titulaire: KUHN S.A., 67706 Saverne Cedex (FR)
(72) Inventeur: DEMANET, Didier, F-57820 SAINT-LOUIS (FR); HIGEL, Eric, F-67310 HOHENGOEFT (FR)
(86) Numéro de dépôt international: PCT/FR2004/050445
(87) Numéro de publication internationale: WO 2005/032238

(56) Documents cités:
- EP-A- 0 370 304
- EP-A- 0 461 386
- DE-A- 3 601 354
- GB-A- 1 334 112
- US-A- 4 128 987

## Description

La présente invention se rapporte au domaine technique générale du machinisme agricole. Elle se rapporte plus particulièrement à une machine de fenaison comportant une structure porteuse munie d'au moins un organe travaillant et pouvant être reliée à un tracteur au moyen d'un dispositif d'accouplement constitué par un cadre muni de deux attaches inférieures et d'une attache supérieure, ledit cadre est articulé par rapport à ladite structure porteuse au moyen d'une première articulation d'axe sensiblement horizontal.

Une telle machine est connue de l'homme de l'art par l'intermédiaire du document DE 40 19 077**.** Il s'agit d'une machine de fenaison et notamment d'une faneuse comportant une structure porteuse. Cette dernière est composée d'une poutre de liaison qui comporte à l'avant un cadre et à l'arrière une poutre transversale. Ladite machine pouvant être raccordée à l'attelage trois points d'un tracteur au moyen dudit cadre muni de deux attaches inférieures et d'une attache supérieure. La poutre transversale comporte un tronçon central portant deux organes travaillants animés par la prise de force du tracteur. La structure porteuse est susceptible de pivoter autour d'une articulation d'axe vertical au travail et autour d'une articulation d'axe horizontal au transport. Chaque organe travaillant étant un rotor de travail qui est soutenu par une roue d'appui.

Lors du travail, cette machine connue est susceptible de pivoter autour de l'axe vertical pour suivre le tracteur et grâce à un attelage flottant la machine est susceptible de suivre les dénivellations du terrain. Pour le transport, ledit tronçon central doit être positionné transversalement à la direction d'avance et dans le prolongement du tracteur. Cette fonction est réalisée par deux tiges disposées entre le tronçon central et les attaches inférieures du cadre. Les tiges sont télescopiques et freinées pour amortir les chocs lors du recentrage de ladite faneuse. Par contre dans la position de transport, lesdites tiges télescopiques sont complètement rétractées, elles sont en butée contre le fond du perçage.

Le document DE 36 01 354 décrit également une machine de fenaison avec un dispositif de suspension sous forme d'une tige télescopique, articulé entre le dispositif d'accouplement et la structure porteuse. Ce dispositif de suspension est actif au travail lorsque les roues s'appuient sur le sol mais lors du transport, il n'est pas en mesure d'absorber les oscillations et de neutraliser les chocs car la tige télescopique est en butée.

La machine décrite dans le document GB 1 334 112 présente un cadre qui est articulé par rapport à la structure porteuse au moyen d'une articulation d'axe vertical. Cette machine ne dispose pas d'un dispositif de suspension permettant d'absorber les chocs au transport. En effet, les ressorts réalisent seulement un amortissement du pivotement autour de l'articulation verticale lors du relevage de la machine.

De manière connue, ces machines sont portées au cours des déplacements dans les prés et selon leur poids, portées ou traînées lors des déplacements sur route. Lorsque lesdites machines sont portées, l'attelage du tracteur et le dispositif d'accouplement sont soumis à des efforts très importants qui deviennent considérables si le sol est accidenté.

Actuellement, les exploitations agricoles grandissent et ainsi la distance de la ferme au champ et la distance de champ à champ augmente. Dans un souci de productivité, les exploitations agricoles utilisent des machines devenant de plus en plus grandes pour lesquelles la largeur de travail évolue en conséquence. Elles ont ainsi surtout recours au matériel repliable par vérins hydrauliques pour palier à l'encombrement en largeur pour le transport sur route. Le repliage de telles machines est généralement effectué vers le haut ou vers l'arrière. Pour ces machines portées, le centre de gravité est donc relativement en arrière par rapport à l'attelage du tracteur et est relativement éloigné du sol. Lors des déplacements sur chemins accidentés à des vitesses pouvant atteindre les 40 km/h, l'attelage est plus ou moins sollicité. La machine attelée derrière le tracteur oscille de bas en haut et inversement provoquant des chocs brusques et importants sur la structure porteuse de la machine. Ce phénomène se traduit par une usure plus rapide des pièces sollicitées pouvant aller jusqu'à une rupture totale et par une instabilité de conduite.

Le but de la présente invention est de proposer une machine telle que décrite dans l'introduction et qui ne comporte pas les inconvénients précités de la machine connue, c'est-à-dire proposer une machine comportant des moyens permettant d'absorber voire d'éviter de transmettre les chocs lors du transport et par conséquent de limiter la fatigue de la structure de ladite machine. Ce problème est résolu par les caractéristiques techniques telles que divulguées dans la partie caractérisante de la revendiaction 1.

A cet effet, une importante caractéristique de l'invention consiste en ce que ladite machine comporte un dispositif de suspension, constitué d'une tige télescopique combinée à un élément élastique, permettant d'absorber les oscillations et de neutraliser les chocs autour de ladite première articulation lors du transport, ladite tige télescopique n'est pas en butée lors du transport et que ledit dispositif de suspension est articulé entre ledit dispositif d'accouplement et ladite structure porteuse.

Une autre caractéristique de la présente invention consiste en ce que le dispositif de suspension est combiné à un moyen amortisseur permettant d'atténuer les chocs et de contrôler les rebonds des chocs.

D'une manière avantageuse, ce dispositif de suspension est composé d'un ressort et le moyen amortisseur est constitué par un vérin hydraulique connecté à un accumulateur oléopneumatique. Ces éléments sont relativement simples.

D'autres caractéristiques et avantages de l'invention ressortiront de la description ci-après d'exemples de réalisation non limitatifs de la machine selon l'invention, avec références aux dessins annexés dans lesquels :
- la **figure 1** représente une vue de côté d'une machine selon l'invention en position de transport,
- la **figure 2** représente une vue de dessus de la machine selon la figure 1,
- la **figure 3** représente une vue de détail d'un exemple de réalisation d'un dispositif de suspension en position de transport,
- la **figure 4** représente une vue schématique d'un autre exemple de réalisation du dispositif de suspension destiné à être monté sur une machine selon l'invention dans une position de transport,
- la **figure 5** représente une vue schématique du dispositif de suspension de la figure 4 dans une position de travail.

Telle qu'elle est représentée sur les figures, la machine (1) selon l'invention comporte une structure porteuse (2). Celle-ci peut être reliée aux barres inférieures d'attelage (3) et à la barre supérieure d'attelage (4) d'un tracteur (5) au moyen d'un dispositif d'accouplement (6). Ledit tracteur servant à animer et à déplacer la machine (1) dans la direction (A). Ce dispositif d'accouplement (6) est constitué par un cadre (7) avec deux attaches inférieures (8) et une attache supérieure (9). Dans la suite de la description, les notions suivantes "avant" et "arrière", "devant" et "derrière" sont définies par rapport au sens d'avance (A) et les notions "droite" et "gauche" sont définies en regardant ladite machine (1) de l'arrière dans le sens d'avance (A).

Ledit cadre (7) est articulé sur la structure porteuse (2) d'une part au moyen d'une première articulation (23) d'axe (23a) sensiblement horizontal et perpendiculaire à la direction d'avance (A) et d'autre part au moyen d'une deuxième articulation (10) d'axe (10a) sensiblement vertical et transversal à la direction d'avance (A). Le cadre (7) peut ainsi pivoter autour de l'axe sensiblement horizontal (23a) et l'axe sensiblement vertical (10a). Pour sa part, la structure porteuse (2) se compose d'une poutre transversale (11) et d'une poutre de liaison (12). La poutre de liaison (12) relie la poutre transversale (11) audit cadre (7). La poutre transversale (11) est constituée d'un tronçon central (13) et de plusieurs tronçons latéraux (14). Ces derniers sont liés audit tronçon central (13) par une troisième articulation (15) respective. Les troisièmes articulations (15) présentent chacune un axe (15a) sensiblement horizontal et dirigé dans la direction d'avancement (A). La structure porteuse (2) est munie d'organes travaillants répartis de façon homogène sur la poutre transversale (11). Dans l'exemple de réalisation représenté aux figures, l'organe travaillant est avantageusement un rotor (16).

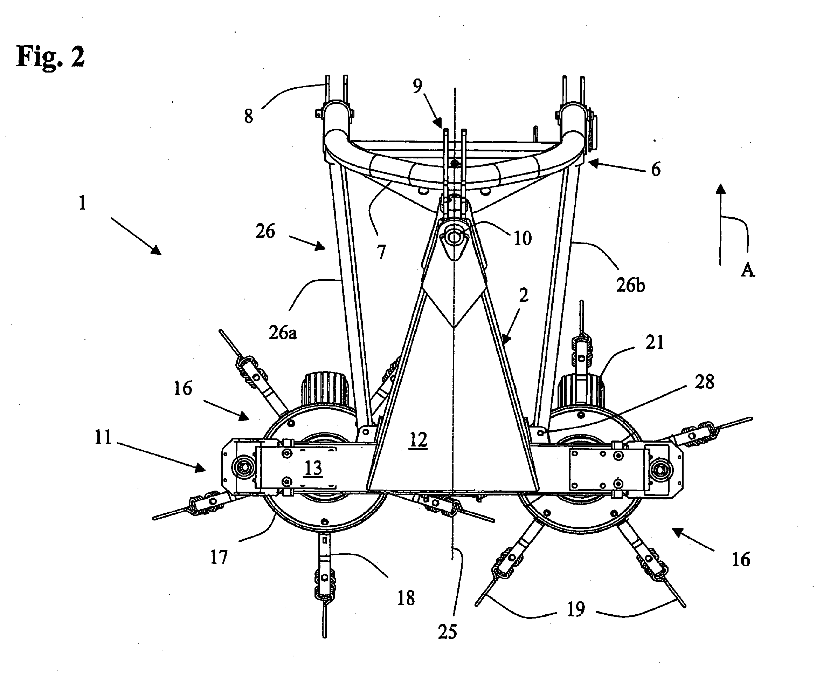

Dans l'exemple représenté à la figure 2, le tronçon central (13) comporte deux rotors (16). Chacun de ces rotors (16) est constitué par un moyeu (17) sur lequel sont fixés plusieurs bras (18) portant des fourches (19) à leurs extrémités libres. Chaque moyeu (17) est monté de manière à pouvoir tourner sur un axe support (20). Celui-ci est sensiblement vertical ou incliné dans la direction d'avancement (A). Les axes supports (20) sont montés dans des paliers prévus dans des boîtiers du tronçon central (13). Chaque axe support (20) porte à son extrémité inférieure une ou deux roues (21) qui roulent sur le sol durant le travail.

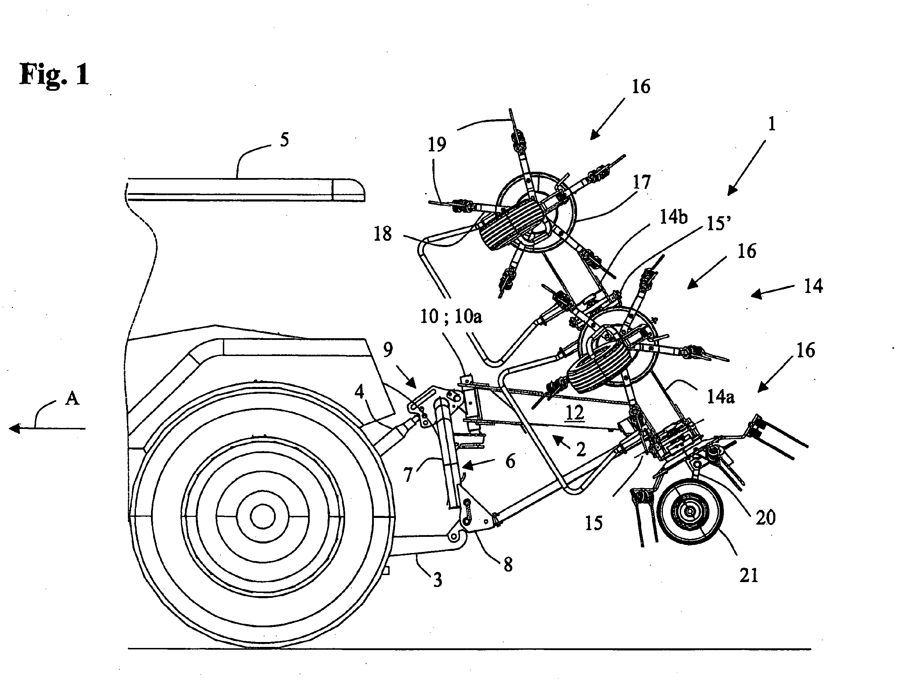

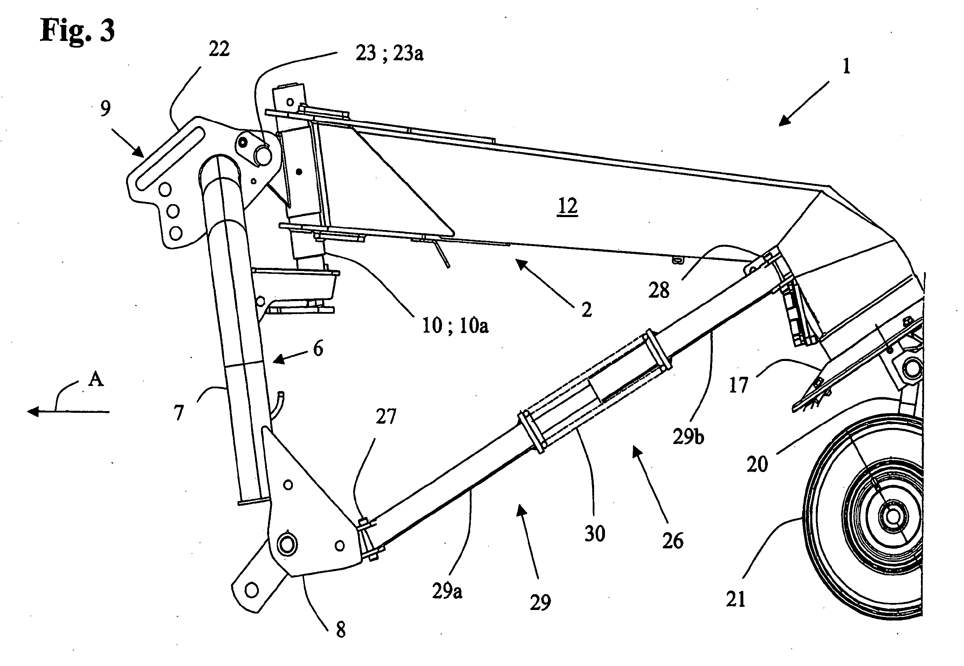

Dans l'exemple de réalisation de la figure 1, la machine (1) comporte deux tronçons latéraux (14a, 14b ; 14c, 14d) liés de part et d'autre du tronçon central (13) à la troisième articulation (15). Chaque tronçon latéral (14a, 14b ; 14c, 14d) porte au moins un rotor (16) tel que décrit précédemment. Les tronçons latéraux (14c, 14d) ne sont pas représentés sur les figures. Ils sont identiques aux tronçons latéraux (14a, 14b) représentés à la figure 1. Les tronçons latéraux (14a, 14c) sont liés audit tronçon central (13) alors que les tronçons latéraux (14b, 14d) sont liés à un tronçon latéral (14a, 14c) respectif au moyen d'une articulation de liaison (15'). Celle-ci comporte un axe sensiblement horizontal et dirigé dans la direction d'avance (A). Les tronçons latéraux (14a, 14b, 14c, 14d) ne sont pas représentés sur les figures 2 et 3 pour une meilleure clarté de représentation.

A la lumière de la figure 3, on remarque que l'attache supérieure (9) est formée par une chape d'attelage (22) qui est articulée sur ledit cadre (7) au moyen de ladite première articulation (23) d'axe (23a) sensiblement horizontal et perpendiculaire à la direction d'avance (A). Ladite première articulation (23) d'axe horizontal (23a) se situe en avant de ladite deuxième articulation (10) d'axe vertical (10a) entre la poutre de liaison (12) et le cadre (7). Le pivotement autour de cet axe horizontal (23a) permet à la machine (1) de suivre les dénivellations du terrain lors du travail. Le pivotement autour de la deuxième articulation (10) d'axe vertical permet à ladite machine (1) de suivre les mouvements et les changements de trajectoire du tracteur (5) lors du travail.

La machine (1) décrite ci-dessus est destinée au fanage. Durant le travail, elle est accouplée aux barres d'attelage (3 et 4) d'un tracteur (5) qui permet de la déplacer dans la direction (A) et de l'animer. La machine (1) est abaissée et les tronçons latéraux (14a, 14b, 14c, 14d) de la poutre transversale (11) sont dépliés. Toutes les roues d'appui (21) des rotors (16) roulent alors sur le sol. La chape d'attelage (22) est alors poussée vers le haut par la barre supérieure d'attelage (4) du tracteur. Ladite chape d'attelage (22) bascule autour de l'axe horizontal (23a) de la première articulation (23) et libère ladite deuxième articulation (10) d'axe vertical (10a) pour que la machine (1) suive fidèlement la trajectoire du tracteur (5). Ce système de blocage est connu de l'homme du métier, il ne sera pas décrit davantage. Les rotors (16) sont entraînés en rotation, autour de leurs axes supports (20) respectifs, de telle sorte qu'ils tourment deux à deux en convergence à l'avant. Lors de cette rotation, leurs fourches (19) ramassent sur la partie avant de leur trajectoire les végétaux qui se trouvent sur le sol, les entraînent vers l'arrière et les étalent à nouveau tout en provoquant leur retournement. Les différents rotors (16) peuvent suivre les ondulations du sol en pivotant avec les tronçons latéraux correspondant (14a, 14b, 14c, 14d) autour des axes d'articulation horizontaux (15, 15'). La structure porteuse (2) est donc susceptible lors du travail de pivoter autour de ladite deuxième articulation (10) d'axe vertical (10a) pour que les rotors (16) puissent suivre le tracteur (5).

Pour le transport, l'utilisateur arrête tout d'abord l'entraînement des rotors (16) et soulève ensuite la machine (1) au moyen des barres d'attelage (3 et 4) du tracteur (5). Simultanément la chape d'attelage (22) est tirée vers le bas, autour de ladite première articulation (23) d'axe horizontal (23a), par la barre supérieure d'attelage (4) ce qui bloque le pivotement de la machine (1) autour de la deuxième articulation (10). Un vérin hydraulique (non représenté) à double effet, articulé entre le tronçon central (13) et le tronçon latéral (14) correspondant permet de déplacer les tronçons latéraux (14a ; 14c) en hauteur autour de leur troisième articulation (15) respective jusqu'à ce qu'ils occupent des positions sensiblement verticales. Ils sont reliés au circuit hydraulique du tracteur (5) et sont actionnés à partir de celui-ci. Dans cette position, la largeur de la machine (1) est considérablement réduite, ce qui favorise les déplacements sur les chemins ou les routes. Comme cela ressort notamment de la figure 2, la machine (1) est avantageusement symétrique par rapport à un plan vertical médian (25) passant par l'axe vertical (10a) de la deuxième articulation (10).

Pour de telles machines agricoles, il est courant d'avoir quatre à huit rotors (16), voire plus de rotors (16) disposés régulièrement sur la poutre transversale (11). La largeur de travail dépend du nombre de rotors (16) montés sur la poutre transversale (11). Le poids d'une telle machine (1) augmente donc en conséquence et sollicite plus ou moins la structure porteuse (2) et le dispositif d'accouplement (6) lors du transport.

Selon une caractéristique importante de l'invention, ladite machine de fenaison (1) comporte un dispositif de suspension (26) permettant d'absorber les oscillations et neutraliser les chocs autour de la première articulation (23), lors du transport. Les oscillations et les chocs sont relativement importants car le tracteur (5) se déplace sur des routes et chemins accidentés avec une vitesse élevée pour arriver rapidement à une autre parcelle. De part le poids relativement important de cette machine portée (1), la structure porteuse (2), le dispositif d'accouplement (6) et les barres d'attelage (3, 4) du tracteur (5) sont sollicités en fatigue. Le dispositif de suspension (26) permet de limiter ces sollicitations voire même de les neutraliser.

Comme cela est représenté sur la figure 3, le dispositif de suspension (26) est articulé entre ledit dispositif d'accouplement (6) et ladite structure porteuse (2). Ce dispositif de suspension (26) est lié au dispositif d'accouplement (6) via une quatrième articulation (27) et à la poutre transversale (11) via une cinquième articulation (28). Selon un exemple de réalisation représenté sur la figure 2, un tel dispositif de suspension (26) comporte deux organes de suspension (26a, 26b). Un organe de suspension (26a, 26b) est disposé, d'une manière préférentielle, de chaque côté dudit plan vertical médian (25). L'organe de suspension (26a, 26b) peut être réalisé simplement, comme montré à la figure 3, par une tige télescopique (29) combinée à un élément élastique (30). Ladite tige télescopique (29) est composée d'une première tige (29a) destinée à venir se glisser dans une deuxième tige (29b). Une extrémité de l'élément élastique (30) est solidaire de la deuxième tige (29b) alors que l'autre extrémité est libre. L'extrémité libre de l'élément élastique (30) est destinée à venir en butée contre un épaulement sur la première tige (29a) lors du transport.

Chaque organe de suspension (26a, 26b) est lié à l'attache inférieure (8) respective au moyen de ladite quatrième articulation (27) et au tronçon central (13) au moyen de ladite cinquième articulation (28). La longueur variable de ladite tige (29) permet à la machine (1) de s'adapter au terrain lors du travail et permet également une longueur réduite pour le transport. L'élément élastique (30), disposé autour de ladite tige télescopique (29), permet d'absorber les chocs transmis à la structure porteuse (2) de la machine (1) et à l'attelage (3, 4) du tracteur (5) lors du passage d'un obstacle. Il est important que les tiges télescopiques (29) ne soient pas complètement rétractées dans la position de transport. Ainsi le débattement restant aux tiges télescopiques (29) jusqu'au raccourcissement complet, permet à l'élément élastique (30) d'être actif donc d'absorber les variations de longueur dues aux chocs.

Selon une autre caractéristique importante de l'invention, ledit dispositif de suspension (26) est combiné à un moyen amortisseur (31). Ceci permet d'atténuer les chocs absorbés par le dispositif de suspension (26) et de contrôler les rebonds suite à des chocs. Ledit moyen amortisseur (31) est aussi articulé entre ledit dispositif d'accouplement (6) et la structure porteuse (2). Il est avantageusement lié entre lesdites quatrième et cinquième articulations (27, 28). Un tel moyen amortisseur (31) est disposé de part et d'autre du plan vertical médian (25).

Ce moyen amortisseur (31) intervient principalement durant le travail. Il assure notamment la fonction rappel au centre de ladite structure porteuse (2). Il ramène le tronçon central (13) dans le prolongement du tracteur (5) dans une position sensiblement perpendiculaire à la direction d'avance (A) lors du passage de la position de travail à celle de transport. Le moyen amortisseur (31) assure le repositionnement de ladite machine (1) dans l'axe du tracteur (5) lors du relevage de cette dernière. Ces moyens amortisseur (31) permettent d'autre part, d'assurer une certaine stabilité lors du travail, par exemple lorsqu'il y a plus de fourrage d'un côté du plan vertical médian (25) que de l'autre. La machine (1) aura tendance à pivoter autour de l'axe vertical (10a) pour se trouver dans une position extrême, pivotée au maximum par rapport à la direction d'avance. Ce moyen amortisseur (31) est réalisé par deux organes amortisseur dont un est disposé de chaque côté du plan vertical médian (25).

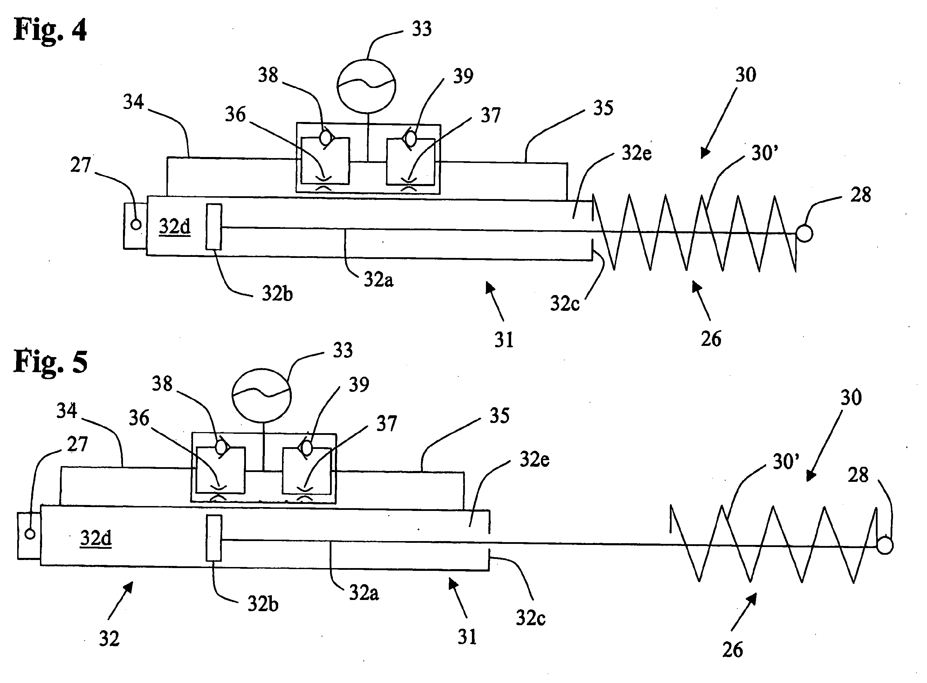

Les figures 4 et 5 représentent un deuxième exemple de réalisation de l'invention. Ici, l'organe amortisseur est avantageusement réalisé par un vérin hydraulique (32) relié à un accumulateur oléopneumatique (33). Le vérin hydraulique (32) est solidarisé à l'attache inférieure (8) du dispositif d'accouplement (6) via la quatrième articulation (27). Le vérin (32) est à double effet et présente une tige (32a) dont une extrémité est liée au tronçon central (13) au moyen de ladite cinquième articulation (28), et dont l'autre extrémité sert de piston (32b) à l'intérieur d'un cylindre (32c) de manière à former deux chambres (32d, 32e). Les deux chambres (32d, 32e) sont reliées audit accumulateur oléopneumatique (33) via des conduites (34, 35).

A la lumière de ces figures, on remarque que le dispositif de suspension (26) est combiné audit moyen amortisseur (31). La tige du vérin (32a) réalise avantageusement le guidage de l'élément élastique (30). Une extrémité de cet élément élastique (30) est liée à la cinquième articulation (28) alors que l'autre extrémité est en appui contre le cylindre (32c). On peut constater que le piston (32b), dans la réalisation particulière représentée à la figure 4, n'est pas en butée au fond du cylindre (32c). Le dispositif de suspension (26) représenté sur la figure 4 est dans une position de transport. La course disponible jusqu'à buter contre le fond du cylindre (32c) permet d'amortir un éventuel choc lors du transport. L'élément élastique (30) est réalisé par un ressort (30') travaillant en compression.

Lorsque la machine (1) est relevée et que le tracteur (5) roule sur un sol non plat, on comprend que les efforts auxquels sont soumis le dispositif d'accouplement (6) entraînent la structure porteuse (2) en déplacement relatif globalement vertical. Ce déplacement relatif est autorisé par la variation de longueur des vérins (32). Au transport, cette variation de longueur est notamment réalisée par la compression du ressort (30') qui absorbe le choc. Lorsque le ressort (30') se comprime, la tige du vérin (32a) rentre dans ledit cylindre (32c) et amorti le choc. L'accumulateur (33) autorise la variation du volume du liquide hydraulique contenu dans lesdites chambres (32d, 32e) du vérin (32). Ce ressort (30') agit ainsi essentiellement durant le transport.

Les deux chambres (32d, 32e) sont reliées l'une à l'autre au moyen des conduites respectives (34, 35). L'accumulateur oléopneumatique (33) compensant la différence de volume desdites chambres (32d, 32e). On voit encore qu'il est prévu des étranglements (36, 37) montés chacun sur une conduite (34, 35). Chaque étranglement (36, 37) est destiné à limiter le débit du fluide qui est véhiculé dans ladite conduite (34, 35) correspondante et à créer de ce fait une pression en amont dudit étranglement (36, 37) supérieure à la pression en aval dudit étranglement (36, 37). Lorsque le fluide, dans la conduite (34, 35) concernée, est statique, c'est-à-dire que le débit est nul, la pression régnant de chaque côté de l'étranglement (36, 37) correspondant est identique. Un premier étranglement (36) est situé sur la première conduite (34) et est destiné à limiter le débit du fluide en provenance de la première chambre (32d) du vérin (32). Un deuxième étranglement (37) est situé sur la deuxième conduite (35) et est destiné à limiter le débit du fluide en provenance de la deuxième chambre (32e) du vérin (32). On voit encore qu'il est prévu un premier clapet anti-retour (38) situé sur la première conduite (34) entre la première chambre (32d) et l'accumulateur oléopneumatique (33). Ce premier clapet anti-retour (38) est destiné à autoriser uniquement le passage du fluide en provenance de l'accumulateur (33) vers la première chambre (32d). Un deuxième clapet anti-retour (39) est, quant à lui, situé sur la deuxième conduite (35). Ce deuxième clapet anti-retour (39) est destiné à autoriser uniquement le passage du fluide en provenance de l'accumulateur (33) vers la deuxième chambre (32e). Le premier étranglement (36) et le premier clapet anti-retour (38) sont montés en parallèle sur la première conduite (34). Le deuxième étranglement (37) et le deuxième clapet anti-retour (39) sont montés en parallèle sur la deuxième conduite (35).

Les étranglements (36, 37) permettent donc de ralentir le déplacement du fluide d'une chambre du vérin (32) à l'autre et donc le déplacement du piston (32b) dans le cylindre (32c). Ceci permet d'amortir les chocs entre la structure porteuse (2) et l'attelage (3, 4) du tracteur (5) lors du transport et d'amortir le déplacement de recentrage de la structure porteuse (2) lors d'un travail en dévers.

Dans la position de transport, chaque vérin (32) présente approximativement une même longueur. Cette longueur dépend du degré de compression du ressort (30'). Dans la position de travail par contre, les vérins (32) présentent d'une part une longueur souvent plus importante que lors du transport et d'autre part, la longueur desdits vérin (32) n'est pas nécessairement identique de chaque côté du plan vertical médian (25). Ainsi un des vérins (32) est souvent plus long que l'autre lors de la prise d'un virage par exemple.

La figure 5 représente le dispositif de suspension (26) avec le moyen amortisseur (31) dans une position de travail. Dans cette position, les roues (21) de la machine (1) reposent au sol et lesdits vérins (32) sont plus ou moins allongés. La machine (1) est alors susceptible de pivoter autour de la deuxième articulation (10) d'axe vertical (10a) selon la direction d'avance (A) du tracteur (5). D'après la figure 2, on remarque qu'un déplacement angulaire de la structure porteuse (2) autour de l'axe vertical (10a) est limité par les deux vérins (32). Il est toutefois possible de pivoter d'un certain angle par rapport au plan vertical médian (25) en jouant sur la course des tiges (32a) des vérins (32) articulés entre le dispositif d'accouplement (6) et la poutre transversale (11). L'adaptation en longueur de chaque vérin (32) permet avantageusement à ladite structure porteuse (2) de s'adapter aux mouvements de lacet et aux mouvements de tangage entre ledit tracteur (5) et ladite machine (1).

Dans la position de travail de la machine (1), le dispositif de suspension (26) n'est pas actif. D'après la figure 5, on remarque que l'extrémité du ressort (30') est libre sur la tige du vérin (32a). Le ressort (30') n'est pas en contact avec le cylindre (32c). Le moyen amortisseur (31) par contre, permet d'atténuer les chocs transmis à la structure porteuse (2) lorsque la machine (1) passe de la position de travail à la position de transport. Il stabilise les mouvements de lacet au travail.

Il est bien évident que l'invention n'est pas limitée aux modes de réalisation décrits et représentés sur les dessins annexés. Des modifications restent possibles, notamment en ce qui concerne la constitution des divers éléments ou par substitution d'équivalents techniques, sans sortir pour autant du domaine de protection.

La machine de fenaison protégée pourrait également être une andaineuse permettant de rassembler les végétaux préalablement éparpillés sur des rangées. Une machine permettant de rassembler plusieurs rangées de végétaux peut également être protégée par cette invention.

Il est parfaitement possible que ladite machine (1) ne comporte qu'un seul organe de suspension (26a ; 26b). Il serait alors disposé au centre de la machine (1), sensiblement sur le plan vertical médian (25). L'organe de suspension (26a ; 26b) serait alors relié à une traverse reliant les deux attaches inférieures (8).

Le dispositif de suspension (26) pourrait très bien être implanté dans la partie haute entre l'attache supérieure (9) et la structure porteuse (2) en déplaçant l'axe horizontal (23a) en direction du sol.

Il est possible que l'élément élastique (30) soit remplacé par un agencement de rondelles Belleville ou d'éléments en élastomère.

## Revendications

1. Machine de fenaison comportant une structure porteuse (2) munie d'au moins un organe travaillant et pouvant être reliée à un tracteur (5) au moyen d'un dispositif d'accouplement (6) constitué par un cadre (7) muni de deux attaches inférieures (8) et d'une attache supérieure (9), ledit cadre (7) est articulé par rapport à ladite structure porteuse (2) au moyen d'une première articulation (23) d'axe sensiblement horizontal (23a), ***caractérisée par le fait* que** ladite machine (1) comporte un dispositif de suspension (26), constitué d'une tige télescopique (29 ; 32) combiné à un élément élastique (30), permettant d'absorber les oscillations et de neutraliser les chocs autour de ladite première articulation (23) lors du transport, ladite tige télescopique (29 ; 32) n'est pas en butée lors du transport et que ledit dispositif de suspension (26) est articulé entre ledit dispositif d'accouplement (6) et ladite structure porteuse (2).

2. Machine selon la revendication 1, ***caractérisée par le fait* que** ledit cadre (7) est également articulé par rapport à ladite structure porteuse (2) au moyen d'une deuxième articulation (10) d'axe sensiblement vertical (10a), ladite deuxième articulation (10) est libre au travail.

3. Machine selon la revendication 1 ou 2, ***caractérisée par le fait* que** ledit dispositif de suspension (26) comporte au moins un organe de suspension (26a, 26b) constitué d'une tige (29) et d'un élément élastique (30).

4. Machine selon l'une quelconque des revendications 1 à 3, ***caractérisée par le fait* qu'**un organe de suspension (26a, 26b) est disposé de part et d'autre d'un plan vertical médian (25) passant par l'axe vertical (10a) de ladite deuxième articulation (10).

5. Machine selon l'une quelconque des revendications 1 à 4, ***caractérisée par le fait* qu'**une extrémité de l'organe de suspension (26a, 26b) est liée à proximité d'une attache inférieure (8) respective au moyen d'une quatrième articulation (27).

6. Machine selon l'une quelconque des revendications 1 à 5, ***caractérisée par le fait* que** ledit dispositif de suspension (26) est combiné à un moyen amortisseur (31), lequel est articulé entre ledit dispositif d'accouplement (6) et ladite structure porteuse (2), ledit moyen amortisseur (31) permet de recentrer ladite machine (1) lors du passage à la position de transport

7. Machine selon la revendication 6, ***caractérisée par le fait* que** ledit moyen amortisseur (31) est constitué d'un organe amortisseur réalisé sous la forme d'un vérin hydraulique (32) connecté à un accumulateur oléopneumatique (33), ledit vérin (32) comportant une tige (32a), un cylindre (32c) et un piston (32b) formant deux chambres (32d, 32e), lesdites chambres (32d, 32e) étant connectées audit accumulateur oléopneumatique (33) au moyen de conduites (34, 35) respectives.

8. Machine selon la revendication 7, ***caractérisée par le fait* que** ladite tige (32a) du vérin (32) guide ledit élément élastique (30) et qu'une extrémité de ce dernier est en contact avec ledit cylindre (32c) dans la position de transport.

9. Machine selon la revendication 7, ***caractérisée par le fait* que** chaque conduite (34, 35) comporte un étranglement (36, 37) respectif permettant de limiter le débit de fluide en provenance de ladite chambre (32d, 32e) respective.

10. Machine selon la revendication 9, ***caractérisée par le fait* que** chaque conduite (34, 35) comporte un clapet anti-retour respectif (38, 39) monté en parallèle avec l'étranglement correspondant (36, 37).

11. Machine selon l'une quelconque des revendications 3 à 10, ***caractérisée par le fait* que** l'élément élastique (30) se compose d'un ressort (30') agencé de manière à travailler à la compression.

12. Machine selon l'une quelconque des revendications 1 à 11, ***caractérisée par le fait* que** ledit organe travaillant est un rotor (16) lié à ladite structure porteuse (2), lequel est entraîné en rotation autour d'un axe support correspondant (20) dirigé vers le bas et portant à son extrémité inférieure au moins une roue (21) d'appui au sol.

## Claims

1. Haymaking machine comprising a carrying structure (2) provided with at least one working member and being able to be connected to a tractor (5) by means of a coupling device (6) consisting of a frame (7) provided with two lower fastenings (8) and one upper fastening (9); the said frame (7) is articulated relative to the said carrying structure (2) by means of a first articulation (23) with a substantially horizontal axis (23a), ***characterized in* that** the said machine (1) comprises a suspension device (26) consisting of a telescopic rod (29; 32) combined with an elastic element (30), making it possible to absorb the oscillations and neutralize the impacts about the said first articulation (23) during transport; the said telescopic rod (29; 32) is not in abutment during transport and that the said suspension device (26) is articulated between the said coupling device (6) and the said carrying structure (2).

2. Machine according to Claim 1, ***characterized in* that** the said frame (7) is also articulated relative to the said carrying structure (2) by means of a second articulation (10) with a substantially vertical axis (10a); the said second articulation (10) is free in work.

3. Machine according to Claim 1 or 2, ***characterized in* that** the said suspension device (26) comprises at least one suspension member (26a, 26b) consisting of a rod (29) and an elastic element (30).

4. Machine according to any one of Claims 1 to 3, ***characterized in* that** a suspension member (26a, 26b) is placed on either side of a vertical mid-plane (25) passing through the vertical axis (10a) of the said second articulation (10).

5. Machine according to any one of Claims 1 to 4, ***characterized in* that** one end of the suspension member (26a, 26b) is connected in the vicinity of a respective lower fastening (8) by means of a fourth articulation (27).

6. Machine according to any one of Claims 1 to 5, ***characterized in* that** the said suspension device (26) is combined with a damping means (31) which is articulated between the said coupling device (6) and the said carrying structure (2); the said damping device (31) makes it possible to recentre the said machine (1) during the transition to the transport position.

7. Machine according to Claim 6, ***characterized in* that** the said damping means (31) consists of a damping member made in the form of a hydraulic cylinder (32) connected to an oleo-pneumatic accumulator (33), the said cylinder (32) comprising a rod (32a), a cylinder (32c) and a piston (32b) forming two chambers (32d, 32e), the said chambers (32d, 32e) being connected to the said oleo-pneumatic accumulator (33) by means of respective ducts (34, 35).

8. Machine according to Claim 7, ***characterized in* that** the said rod (32a) of the cylinder (32) guides the said elastic element (30) and that one end of the latter is in contact with the said cylinder (32c) in the transport position.

9. Machine according to Claim 7, ***characterized in* that** each duct (34, 35) comprises a respective flow restrictor (36, 37) making it possible to limit the flow of fluid from the said respective chamber (32d, 32e).

10. Machine according to Claim 9, ***characterized in* that** each duct (34, 35) comprises a respective non-return valve (38, 39) mounted in parallel with the corresponding flow restrictor (36, 37).

11. Machine according to any one of Claims 3 to 10, ***characterized in* that** the elastic element (30) consists of a spring (30') arranged so as to work in compression.

12. Machine according to any one of Claims 1 to 11, ***characterized in* that** the said working member is a rotor (16) connected to the said carrying structure (2), which is driven in rotation about a corresponding support shaft (20) directed downwards and supporting at its lower end at least one soil-resting wheel (21).

## Patentansprüche

1. Heuerntemaschine mit einer Tragestruktur (2), die mit mindestens einem Arbeitselement versehen ist und mit einem Traktor (5) mittels einer Kupplungsvorrichtung (6) verbunden werden kann, die von einem Rahmen (7) gebildet ist, der mit zwei unteren Befestigungen (8) und einer oberen Befestigung (9) versehen ist, wobei der Rahmen (7) in Bezug zur Tragestruktur (2) mittels eines ersten Gelenks (23) mit einer im Wesentlichen horizontalen Achse (23a) angelenkt ist, ***dadurch gekennzeichnet,* dass** die Maschine (1) eine Aufhängungsvorrichtung (26) umfasst, die von einer Teleskopstange (29; 32) in Kombination mit einem elastischen Element (30) gebildet ist, die es ermöglicht, die Schwingungen aufzunehmen und die Stöße um das erste Gelenk (23) beim Transport zu neutralisieren, wobei die Teleskopstange (29, 32) beim Transport nicht am Anschlag ist, und dass die Aufhängungsvorrichtung (26) zwischen der Kupplungsvorrichtung (6) und der Tragestruktur (2) angelenkt ist.

2. Maschine nach Anspruch 1, ***dadurch gekennzeichnet,* dass** der Rahmen (7) ebenfalls in Bezug zur Tragestruktur (2) mittels eines zweiten Gelenks (10) mit einer im Wesentlichen vertikalen Achse (10a) angelenkt ist, wobei das zweite Gelenk (10) bei der Arbeit frei ist.

3. Maschine nach Anspruch 1 oder 2, ***dadurch gekennzeichnet,* dass** die Aufhängungsvorrichtung (26) mindestens ein Aufhängungselement (26a, 26b) umfasst, das von einer Stange (29) und einem elastischen Element (30) gebildet ist.

4. Maschine nach irgend einem der Ansprüche 1 bis 3, ***dadurch gekennzeichnet,* dass** ein Aufhängungselement (26a, 26b) beiderseits einer vertikalen Mittelebene (25) angeordnet ist, die durch die Vertikalachse (10a) des zweiten Gelenks (10) verläuft.

5. Maschine nach irgend einem der Ansprüche 1 bis 4, ***dadurch gekennzeichnet,* dass** ein Ende des Aufhängungselements (26a, 26b) in der Nähe einer jeweiligen unteren Befestigung (8) mittels eines vierten Gelenks (27) verbunden ist.

6. Maschine nach irgend einem der Ansprüche 1 bis 5, ***dadurch gekennzeichnet,* dass** die Aufhängungsvorrichtung (26) mit einem Dämpfungsmittel (31) kombiniert ist, welches zwischen der Kupplungsvorrichtung (6) und der Tragestruktur (2) angelenkt ist, wobei es das Dämpfungsmittel (31) ermöglicht, die Maschine (1) beim Übergang in die Transportposition wieder zu zentrieren.

7. Maschine nach Anspruch 6, ***dadurch gekennzeichnet,* dass** das Dämpfungsmittel (31) von einem Dämpfungselement gebildet ist, das in Form eines Hydraulikzylinders (32) ausgeführt ist, der an einen oleopneumatischen Akkumulator (33) angeschlossen ist, wobei der Zylinder (32) eine Stange (32a), einen Zylinder (32c) und einen Kolben (32b) umfasst, die zwei Kammern (32d, 32e) bilden, wobei die Kammern (32d, 32e) an den oleopneumatischen Akkumulator (33) mittels jeweiligen Leitungen (34, 35) angeschlossen sind.

8. Maschine nach Anspruch 7, ***dadurch gekennzeichnet,* dass** die Stange (32a) des Zylinders (32) das elastische Element (30) führt, und dass ein Ende dieses letztgenannten mit dem Zylinder (32c) in Transportposition in Kontakt ist.

9. Maschine nach Anspruch 7, ***dadurch gekennzeichnet,* dass** jede Leitung (34, 35) eine jeweilige Drosselung (36, 37) umfasst, die es ermöglicht, die Fluidmenge, die von der jeweiligen Kammer (32d, 32e) kommt, zu begrenzen.

10. Maschine nach Anspruch 9, ***dadurch gekennzeichnet,* dass** jede Leitung (34, 35) ein jeweiliges Rückschlagventil (38, 39) umfasst, die parallel mit der entsprechenden Drosselung (36, 37) montiert ist.

11. Maschine nach irgend einem der Ansprüche 3 bis 10, ***dadurch gekennzeichnet,* dass** das elastische Element (30) aus einer Feder (30') besteht, die derart angeordnet ist, dass sie mit Kompression funktioniert.

12. Maschine nach irgend einem der Ansprüche 1 bis 11, ***dadurch gekennzeichnet,* dass** das Arbeitselement ein Rotor (16) ist, der mit der Tragestruktur (2) verbunden ist und in Drehung um eine entsprechende Stützachse (20) angetrieben wird, die nach unten gerichtet ist und an ihrem unteren Ende mindestens ein Rad (21) zur Abstützung am Boden trägt.
